Europäisches Patentamt

European Patent Office

Office européen des brevets

(19)

(11) EP 0 626 799 B1

(12) EUROPÄISCHE PATENTSCHRIFT

(45) Veröffentlichungstag und Bekanntmachung des Hinweises auf die Patenterteilung:
18.03.1998  Patentblatt 1998/12

(51) Int Cl.6: **H05B 41/29**

(21) Anmeldenummer: 94107645.7

(22) Anmeldetag: 17.05.1994

(54) **Verfahren zum Betrieb einer Hochdruckentladungslampe**

Process for operating a high pressure discharge lamp

Procédé pour commander une lampe à décharge haute pression

(84) Benannte Vertragsstaaten:
BE DE FR GB IT NL

(30) Priorität: 25.05.1993  DE 4317368

(43) Veröffentlichungstag der Anmeldung:
30.11.1994  Patentblatt 1994/48

(73) Patentinhaber: Patent-Treuhand-Gesellschaft für elektrische Glühlampen mbH
81543 München (DE)

(72) Erfinder:
• Fromm, Dietrich, Dr.
D-83627 Warngau (DE)
• Seehawer, Jürgen
D-81379 München (DE)
• Bernitz, Franz
D-82008 Unterhaching (DE)

(56) Entgegenhaltungen:
EP-A- 0 386 990           EP-A- 0 399 288
EP-A- 0 502 273           DE-A- 4 109 344

• JOURNAL OF THE ILLUMINATING ENGINEERING SOCIETY, Bd.21, Nr.1, Dezember 1992, NEW YORK US Seiten 60 - 68 RUTAN & AL. 'practical application of pulsed high pressure sodium lamp technology'

**Beschreibung**

Die Erfindung betrifft ein Verfahren zum Betrieb einer Hochdruckentladungslampe gemäß dem Oberbegriff des Patentanspruchs 1.

Insbesondere handelt es sich um ein Verfahren zum Betrieb von Metallhalogenidhochdruckentladungslampen, die von einem Vorschaltgerät mit einem Wechselstromanteil, dessen Frequenz im Ultraschallbereich liegt, gespeist werden.

Ein derartiges Verfahren ist beispielsweise in der DE 28 47 840 C2 offenbart. Bei dem in diesem Patent beschriebenen Verfahren werden die Hochdruckentladungslampen mit einer Wechselspannung betrieben, deren Frequenz in einem schmalen Bereich zwischen 20 kHz und 50 kHz liegt, bei dem im Entladungsmedium keine akustischen Resonanzen auftreten. Unter akustischen Resonanzen versteht man stehende akustische Wellen. Akustische Wellen im Entladungsmedium werden durch periodische Änderungen der über die Lampenelektroden in das Entladungsmedium eingespeisten momentanen elektrischen Leistung erzeugt. Die momentane elektrische Leistung variiert mit der doppelten Wechselspannungs- bzw. Wechselstromfrequenz. Für verschiedene Lampentypen sind in dieser Patentschrift experimentell ermittelte, resonanzfreie Frequenzbänder angegeben.

Ein schwerwiegender Nachteil der hier offenbarten Betriebsweise besteht darin, daß bei horizontaler Brennlage, d.h. bei horizontal angeordneter Entladungsstrecke, eine unerwünschte, durch Konvektion bedingte Krümmung des Entladungsbogens auftritt. Die gas- bzw. dampfförmigen Füllungskomponenten erfahren im Schwerefeld der Erde einen Auftrieb, der zu einem sichelartig nach oben gewölbten Entladungsbogen führt. Diese Entladungsbogenkrümmung wirkt sich störend bei optischen Abbildungen aus und erschwert eine symmetrische Ausleuchtung. Außerdem bewirkt die Entladungsbogenkrümmung eine erhöhte thermische Belastung der oberen Entladungsgefäßwandung, wodurch die Lampenlebensdauer verringert wird.

Zur Beseitigung der Entladungsbogenkrümmung wird in der DE-OS 29 38 273 vorgeschlagen, ein homogenes, vertikal gerichtetes Magnetfeld zu verwenden, das auf das Plasma im Entladungsbogen eine nach unten gerichtete Kraft ausübt. Das Magnetfeld wird von einem Elektromagneten erzeugt, der das Entladungsgefäß halbringartig umgibt. Die Montage und Halterung des Elektromagneten erfordern einen erheblichen zusätzlichen Aufwand.

Ferner ist bekannt, daß beim Betrieb von Metallhalogenidhochdruckentladungslampen an elektronischen Vorschaltgeräten höherer Frequenzen (größer als 20 kHz) auch schmale, lampenspezifische Frequenzbereiche existieren, bei denen keine Entladungsbogenkrümmung auftritt.

Die US-PS 5 121 034 offenbart diese schmalen, experimentell ermittelten Frequenzbereiche für eine niederwattige Metallhalogenidhochdruckentladungslampe, die als Kfz-Lampe verwendet wird.

Es wird hier vorgeschlagen, solche Frequenzbereiche für den Versorgungsstrom der Lampe zu wählen, bei denen im Entladungsmedium akustische Resonanzen angeregt werden, die die durch Konvektion bedingte Entladungsbogenkrümmung reduzieren oder gar beseitigen. Laut der US-PS 5 121 034 ist es vorteilhaft, die Betriebsfrequenz zu modulieren, um eine Verbreiterung der Frequenzbereiche, in denen ein stabiler Lampenbetrieb mit ungekrümmtem Entladungsbogen möglich ist, zu erreichen und auf diese Weise Toleranzen bei der Fertigung des Entladungsgefäßes und beim Vorschaltgerät auszugleichen. Die Modulation der Betriebsfrequenz erfordert allerdings einen erheblichen Schaltungsaufwand.

Es ist die Aufgabe dieser Erfindung, ein Verfahren zum Betrieb einer Hochdruckentladungslampe bereitzustellen, das mit einfachen Mitteln eine Beseitigung der bei horzontaler Betriebslage durch Konvektion bedingten Entladungsbogenkrümmung ermöglicht.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Untersuchungen an verschiedenen, mit Wechselstrom gespeisten Hochdruckentladungslampen, insbesondere an Metallhalogenidhochdruckentladungslampen, haben ergeben, daß ein enger Zusammenhang zwischen dem Verschwinden der bei horizontaler Betriebslage durch Konvektion bedingten Entladungsbogenkrümmung bei bestimmten Frequenzen und dem Auftreten von radialen akustischen Resonanzen im Entladungsmedium besteht.

Unter radialen akustischen Resonanzen werden akustische Resonanzen senkrecht zur Entladungsstrecke verstanden. Die Entladungsstrecke ist durch die Elektrodenköpfe definiert. Alle untersuchten Lampen zeigten im Betriebszustand einen ungekrümmten Entladungsbogen, wenn die Frequenz $F_V$ des Lampenbetriebsstroms so gewählt wurde, daß zwischen ihr und der Grundfrequenz $F_R$ der radialen akustischen Resonanzen folgende Beziehung näherungsweise erfüllt war: $m \cdot 2F_V = F_R \cdot n$. Die Buchstaben m und n in der obigen Formel stehen stellvertretend für ganze Zahlen, vor; zugsweise für kleine ganze Zahlen zwischen 1 und 3. Die obige Formel ist so zu deuten, daß ein gemeinsames Vielfaches der doppelten Betriebsfrequenz $2F_V$ und der Grundfrequenz $F_R$ im Frequenzspektrum des Lampenwechselstroms verfügbar sein muß, um radiale akustische Resonanzen anzuregen. Diese radialen akustischen Resonanzen verhindern eine konvektionsbedingte Krümmung des Entladungsbogens.

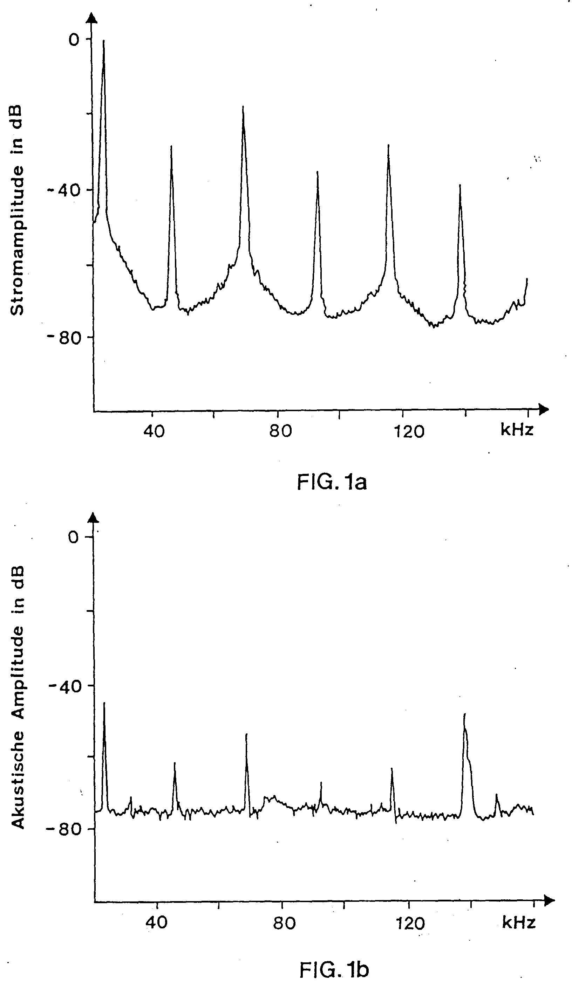

Die Figuren 1a und 1b zeigen eine Frequenzanalyse der Wechselstromamplituden (Figur 1a) und der radialen akustischen Resonanzen (Figur 1b) bei einer 70 W-Metallhalogenidhochdruckentladungslampe. Die Frequenz des Wechselstroms, $F_V$ mit dem diese Lampe gespeist wird, beträgt hier 22 kHz. Bei dieser Betriebsfrequenz findet in der Lampe keine durch Konvektion bedingte Entladungsbogenkrümmung statt. Im Spektrum der Figur la treten bei ganzzahligem Vielfachen der Frequenz $F_V$ = 22 kHz auch Oberwellen auf. Voraussetzung hierfür ist, daß der Lampenwechselstrom nicht sinusförmig ist. Verantwortlich für das Entstehen von akustischen Resonanzen sind periodische Variationen der in das Entladungsmedium eingekoppelten momentanen elektrischen Leistung. Diese periodischen Variationen der momentanen elektrischen Leistung finden mit der doppelten Frequenz $F_V$ des Lampenstroms, also mit $F_P$ = $2F_V$ statt.

Das akustische Resonanzspektrum in Figur 1b zeigt bei ca. 69 kHz und bei 138 kHz zwei stark ausgeprägte Resonanzen. Mit Hilfe der Formel $F_R = 3,83°C/(2\pi R)$, worin C die Schallgeschwindigkeit im Entladungsmedium und R der Radius des Entladungsgefäßes bedeuten, kann die Grundfrequenz $F_R$ der radialen akustischen Resonanzen abgeschätzt werden. Für die oben erwähnte 70 W Metallhalogenidhochdruckentladungslampe ergibt sich mit C = 540 m/s und R = 4,75 mm für $F_R$ = 69 kHz. D.h., daß die ausgeprägten Resonanzen bei 69 kHz und bei 138 kHz im Resonanzspektrum der Figur 1b mit der radialen akustischen Grundresonanz und deren ersten Oberwelle identifiziert werden können. Die radiale akustische Resonanz bei 138 kHz ist stärker ausgeprägt als die radiale akustische Resonanz bei der Grundfrequenz von 69 kHz. Das ist ein Indiz dafür, daß diese 1. akustische Oberwellenresonanz bei 138 kHz durch die 5. Oberwelle des Lampenwechselstroms (bzw. durch die 2. Oberwelle der momentanen elektrischen Leistung), die gemäß Figur la bei 138 kHz liegt, resonant angeregt wird. Für diese 70 W-Metallhalogenidhochdruckentladungslampe besteht also zwischen der Grundfrequenz $F_R$ der radialen akusti schen Resonanz und der niedrigsten Betriebsfrequenz $F_V$, bei der eine krümmungsfreie Entladung stattfindet, folgender Zusammenhang:

$$2 \cdot F_R = 3 \cdot (2F_V) \text{ oder } 2 \cdot F_R = 3 \cdot F_P$$

wobei $F_P$ die Frequenz der momentanen elektrischen Leistung ist (E. Statnic "Zum Hochfrequenzbetrieb von Halogen-Metalldampflampen kleiner Leistung" aus Technisch-wissenschaftliche Abhandlung der OSRAM Gesellschaft, Bd. 12, Springer Verlag, Seite 394 ff).

Ähnliche Beziehungen zwischen der Grundfrequenz der radialen akustischen Resonanzen und einer Betriebsfrequenz, bei der die konvektionsbedingte Entladungsbogenkrümmung nicht auftritt, sind in Tabelle 1 noch für die weiteren Lampentypen angegeben.Die Beispiele in Tabelle 1 zeigen auch, daß diese relativ einfache Beziehung zwischen der radialen akustischen Grundresonanz und der Wechselstromfrequenz der Lampe überraschenderweise sogar für sehr unterschiedliche Lampentypen, d.h. mit unterschiedlicher Leistungsaufnahme, Füllungszusammensetzung und Entladungsgefäßgeometrie gilt. Bisher wurde die Auffassung vertreten, daß ein einfaches theoretisches Modell für die Vorhersage von akustischen Resonanzen nicht angewandt werden kann (vergl. beispielsweise DE 28 47 840, Spalte 6, Zeile 14ff).

Neben den stehenden radialen akustischen Wellen können, in eingeschränktem Umfang, auch stehende azimutale akustische Wellen begradigend auf den Entladungsbogen wirken. In diesem Fall gilt die Beziehung

$$2,89 \, F_{RA} = 3 \, F_P$$

wobei $F_{RA}$ die azimutale akustische Grundresonanzfrequenz und $F_P$ die elektrische Leistungsfrequenz bedeuten. Die azimutale Grundresonanzfrequenz berechnet sich aus der Schallgeschwindigkeit C im Entladungsplasma und dem Radius des Entladungsgefäßes zu $F_{RA} = 1,84 \, C/(2\pi R)$.

Das erfindungsgemäße Verfahren erlaubt es, aus der Geometrie des Entladungsgefäßes eine Wechselstrom- bzw. Wechselspannungsfrequenz für das Vorschaltgerät zu ermitteln, bei der ein Betrieb der Lampe mit ungekrümmtem Entladungsbogen möglich ist.

Tabelle 1

| Lampentyp | Wechselstromfrequenz $F_V$ | Leistungsfrequenz $F_P$ | Radiale akustische Resonanzfrequenz $F_R$ | Entladungsgefäßradius R senkrecht zur Entladungsstrecke |
|---|---|---|---|---|
| HQI-TS 70W/ WDL | 22 kHz | 44 kHz | 69 kHz | 4,75 mm |
| HQI-TS 150W/ WDL | 18 kHz | 36 kHz | 54 kHz | 6,0 mm |

Tabelle 1   (fortgesetzt)

| Lampentyp | Wechselstromfrequenz $F_V$ | Leistungsfrequenz $F_P$ | Radiale akustische Resonanzfrequenz $F_R$ | Entladungsgefäßradius R senkrecht zur Entladungsstrecke |
|---|---|---|---|---|
| HQI-TS 150W/ NDL | 17,5 kHz | 35 kHz | 51,7 kHz | 6,25 mm |
| D1 35W | 58 kHz | 116 kHz | 227 kHz | 1,5 mm |

Es sei an dieser Stelle noch erwähnt, daß longitudinale akustische Resonanzen im Entladungsmedium, d.h. akustische Resonanzen parallel zur Entladungsstrecke, unerwünscht sind, da diese den Entladungsbogen zum Erlöschen bringen. Longitudinale akustische Resonanzen lassen sich durch geeignete Wahl des Elektrodenabstandes und der Betriebsfrequenz vermeiden.

Das erfindungsgemäße Verfahren zum Betrieb einer Hochdruckentladungslampe wird nachstehend anhand mehrerer Ausführungsbeispiele näher erläutert. Es zeigen:

Figur 1a    eine Frequenzanalyse des Lampenstroms für eine 70 W-Metallhalogenidhochdruckentladungslampe

Figur 1b    eine Frequenzanalyse der akustischen Resonanzen im Entladungsmedium der 70 W-Metallhalogenidhochdruckentladungslampe

Figur 2    die Entladungsbogenkrümmung, d.h., die Auslenkung der Entladungsbogenmitte aus der axialen Lage in Abhängigkeit von der Betriebsfrequenz für eine 70 W-Metallhalogenidhochdruckentladungslampe

Figur 3    eine schematische Darstellung einer Hochdruckentladungslampe

Figur 4    den prinzipiellen Aufbau einer Schaltungsanordnung zum erfindungsgemäßen Betriebsverfahren für eine Hochdruckentladungslampe.

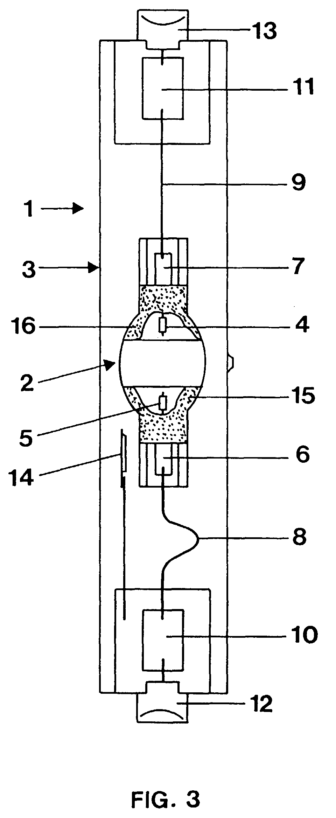

Figur 3 zeigt den prinzipiellen Aufbau der ersten drei in der Tabelle 1 aufgelisteten Hochdruckentladungslampe. Die Lampe 1 besteht aus einem zweiseitig gequetschten Entladungsgefäß 2, das axial innerhalb eines zweiseitig, mittels Molybdänfolieneinschmelzungen 10, 11 abgedichteten Außenkolbens 3 angeordnet ist. Innerhalb des Entladungsgefäßes 2 befinden sich zwei gasdicht eingeschmolzene Lampenelektroden 4, 5, die über jeweils eine Molybdänfolieneinschmelzung 6, 7 elektrisch leitend mit je einer Stromzuführung 8, 9 verbunden sind, die ihrerseits über je eine Molybdänfolieneinschmelzung 10, 11 des Außenkolbens 3 den elektrischen Kontakt zu den Anschlüssen 12, 13 herstellen. Die Lampe 1 besitzt ferner einen Getter 14, der im Außenkolben 3 eingeschlossen ist. Das Entladungsgefäß 2 besteht aus Quarzglas und ist teilweise mit einer wärmereflektierenden Beschichtung 15, 16 versehen.

Der Aufbau der vierten, in der Tabelle 1 aufgelisteten Lampe unterscheidet sich im wesentlichen nur dadurch von dem der anderen Lampen, daß diese keinen Außenkolben 3 besitzt. Das Entladungsgefäß 2 ist bei den ersten drei in Tabelle 1 aufgelisteten Lampen tonnenförmig ausgebaucht und besitzt im Bereich zwischen den beiden axial verlaufenden Elektroden 4, 5 eine rotationssymmetrische Gestalt mit nahezu konstantem Radius R.

Bei der vierten in Tabelle 1 aufgeführten Lampe (D1-Lampe) besitzt das Entladungsgefäß 2 im Bereich zwischen seinen Quetschenden mit den Molybdänfolieneinschmelzungen 6, 7 annähernd die Gestalt eines Rotationsellipsoids.

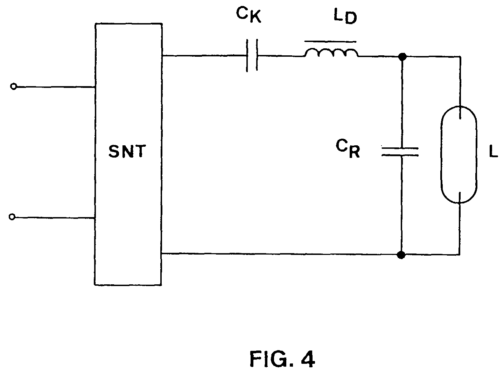

Alle vier in der Tabelle 1 aufgelisteten Lampen werden an einem elektronischen Vorschaltgerät betrieben. Figur 4 zeigt ein Prinzipschaltbild hierzu. Die Hochdruckentladungslampe L ist in einem Serienresonanzkreis, bestehend aus einem Kopplungskondensator $C_K$, einer Drossel $L_D$ und einem Resonanzkondensator $C_R$ integriert, der von einem Schaltnetzteil SNT gespeist wird. Das Schaltnetzteil SNT besteht aus einer fremdgesteuerten Transistorhalbbrücke, wie sie beispielsweise in dem Buch von C.H. Sturm/E. Klein "Betriebsgeräte und Schaltungen für elektrische Lampen", 6. Auflage, Siemens AG, Seite 215 ff, beschrieben ist. Die fremdgesteuerte Transistorhalbbrücke zeichnet sich durch eine hohe Frequenzstabilität (Frequenzgang ±2 %) aus.

Beim ersten Ausführungsbeispiel handelt es sich um eine 70 W-Metallhalogenidhochdruckentladungslampe. In Tabelle 1 wird sie als HQI-TS-70 W/WDL-Lampe bezeichnet.

Ihr Entladungsgefäß 2 hat im tonnenförmig ausgebauchten Bereich zwischen den Elektroden 4, 5 einen inneren Radius von ca. 4,75 mm. Das Volumen des Entladungsraumes beträgt ungefähr 0,69 cm³. Die Füllung der Lampe enthält neben Quecksilber und Argon auch Halogenide der Metalle Zinn, Natrium, Thallium, Indium und Lithium. Diese Lampe wird vom Schaltnetzteil mit einer mittelfrequenten Rechteckspannung von ca. 350 - 400 V und einer Frequenz $F_V$ von ca. 22 kHz versorgt. Die Form des Lampenstroms und der Lampenspannung werden durch die Bauteile des Serienresonanzkreises beeinflußt. Messungen haben gezeigt, daß der Lampenstrom und die Lampenspannung nahezu in Phase sind, und daß die Form des Wechselstroms der Auf- und Entladungskurve eines Kondensators ähnlich ist.

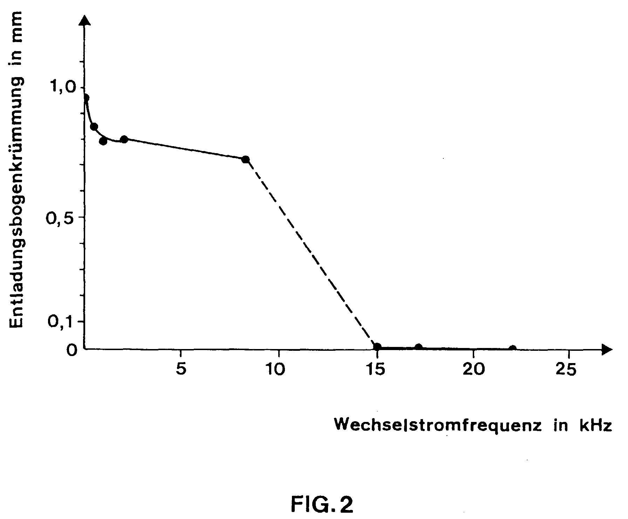

Wie aus Figur 2 ersichtlich, zeigt die Lampe beim Betrieb mit einer Wechselstromfrequenz kleiner als 8 kHz eine Entladungsbogenkrümmung und Im Frequenzbereich von 8-15 kHz ist kein stabiler Lampenbetrieb möglich. Ab einer Wechselstromfrequenz von ca. 15 kHz aufwärts kann die Lampe mit sehr geringer Entladungsbogenkrümmung betrieben werden. Bei ungefähr 23 kHz verschwindet die konvektionsbedingte Auslenkung des Entladungsbogens aus der axialen Lage völlig. Diese Betriebsfrequenz $F_V = 23$ kHz entspricht einer Leistungsfrequenz $F_P$ von $F_P = 46$ kHz. Die Grundfrequenz $F_R$ der radial akustischen Resonanz liegt gemäß der in Figur 1b dargestellten Frequenzanalyse der akustischen Resonanzen und der Formel (1) bei ca. 69 kHz. Damit ist die Beziehung $3 \cdot F_P = 2 \cdot F_R$ bzw. $6 \cdot F_V = 2 \cdot F_R$ in guter Näherung erfüllt. Durch den Betrieb der Lampe bei einer Wechselstromfrequenz von 23 kHz werden im Entladungsmedium radial akustische Resonanzen erzeugt. Es bilden sich stehende Druckwellen im Entladungsmedium aus, die entlang der axial verlaufenden Entladungsstrecke einen Druckknoten und radial nach außen einander abwechselnde Druckmaxima und -minima aufweisen. Diese stehenden Druckwellen dominieren über die Konvektion im Entladungsraum und verhindern eine konvektionsbedingte Entladungsbogenkrümmung.

Beim zweiten Ausführungsbeispiel handelt es sich um eine 150 W-Metallhalogenidhochdruckentladungslampe. Sie wird in der Tabelle 1 als HQI-TS-150 W/WDL-Lampe bezeichnet. Ihr Entladungsgefäß 2 hat im tonnenartig ausgebauchten Bereich zwischen den Elektroden 4, 5 einen inneren Radius von ca. 6,0 mm. Das Volumen des Entladungsgefäßes 2 beträgt ungefähr 1,5 cm³. Die Füllung dieser Lampe enthält die gleichen Füllungskomponenten wie die Lampe gemäß des ersten Ausführungsbeispiels. Unterschiedlich sind nur die Dosierungen der einzelnen Füllungskomponenten. Die Lampe zeigt keine konvektionsbedingte Entladungsbogenkrümmung, wenn sie am Schaltnetzteil SNT mit einer 18 kHz-Reckteckspannung betrieben wird. Die Leistungsfrequenz $F_P$ beträgt dann 36 kHz. Eine Frequenzanalyse der akustischen Resonanzen ergab, daß die Grundfrequenz $F_R$ der radial akustischen Resonanz bei ca. 54 kHz und die 1. Oberwelle bei ca. 108 kHz liegt. Auch hier ist also die Beziehung $3 \cdot F_P = 2 \cdot F_R$ bzw. $6 \cdot F_V = 2 \cdot F_R$ annähernd erfüllt, d.h. die 2. Oberwelle der momentanen elektrischen Leistung und die 1. Oberwelle der radial akustischen Resonanz stimmen überein.

Beim dritten Ausführungsbeispiel handelt es sich um eine weitere 150 W-Metallhalogenidhochdruckentladungslampe. In der Tabelle 1 ist sie als HQI-TS-150 W/NDL-Lampe aufgeführt. Ihr Entladungsgefäß 2 besitzt im ausgebauchten Bereich zwischen den Elektroden 4, 5 einen inneren Radius R von ungefähr 6,25 mm. Die Füllung der Lampe enthält neben Argon, Quecksilber und Zinn auch Zusätze der Halogenide von Natrium, Dysprosium, Holmium, Thulium und Thallium. Diese Lampe besitzt eine höhere Farbtemperatur als die Lampe gemäß des zweiten Ausführungsbeispiels. Sie zeigt beim Betrieb an einer Rechteckspannung von 17,5 kHz keine konvektionsbedingte Entladungsbogenkrümmung. Die Grundfrequenz $F_R$ der radial akustischen Resonanzen und ihre 1. Oberwelle liegen bei ca. 51,7 kHz bzw. bei 102,5 kHz. Es gilt also wieder näherungsweise die Beziehung $3 \cdot F_P = 2 \cdot F_R$. Auch hier ist, wie bei den ersten beiden Ausführungsbeispielen, eine Resonanzbedingung erfüllt, so daß radial akustische Resonanzen im Entladungsmedium erzeugt werden.

Als viertes Ausführungsbeispiel wurde eine 35 W-Metallhalogenidhochdruckentladungslampe untersucht. Es handelt sich um eine Kfz-Lampe. Sie wird in Tabelle 1 als D1-Lampe bezeichnet. Ihr Entladungsgefäß 2 besitzt im Bereich zwischen den Quetschenden die Gestalt eines Rotationsellipsoids. Der innere Halbmesser R senkrecht zur Rotationsachse bzw. zur Entladungsstrecke beträgt ca. 1,5 mm. Als Schaltnetzteil SNT zum Betrieb dieser Lampe wird ein Gegentaktwandler mit zwei Transformatoren verwendet, wie er beispielsweise in dem Buch von C.H. Sturm/E. Klein "Betriebsgeräte und Schaltungen für elektrische Lampen", 6. Auflage, Siemens AG, S. 212 - 215, beschrieben ist. Das Schaltnetzteil erzeugt eine Wechselspannung von 58 kHz, bei der ein Lampen betrieb ohne konvektionsbedingte Entladungsbogenkrümmung möglich ist. Aus einer Frequenzanalyse der akustischen Resonanzen ließ sich die Grundfrequenz der radialen akustischen Resonanzen bei ca. 227 kHz ermitteln. Das entspricht etwa der doppelten Leistungsfrequenz $F_P = 116$ kHz, die ja gerade doppelt so groß wie die Wechselspannungsfrequenz $F_V = 58$ kHz ist. Für die D1-Lampe gilt also näherungsweise die Beziehung $2 F_P = F_R$, d.h. auch hier ist eine Resonanzbedingung erfüllt, die zur Anregung von radial akustischen Resonanzen im Entladungsmedium führt. In der Tabelle 1 sind die Ergebnisse für alle vier Ausführungsbeispiele zusammengefaßt.

**Patentansprüche**

1. Verfahren zum Betrieb einer Hochdruckentladungslampe (1), wobei die Hochdruckentladungslampe (1)

   - ein Entladungsgefäß (2) mit einem annähernd rotationssymmetrischen Entladungsraum und einer gasdicht im Entladungsgefäß (2) eingeschlossenen ionisierbaren Füllung, bestehend aus einem Edelgas oder Edelgasgemisch, wenigstens einem Metallhalogenidzusatz sowie evtl. Quecksilber, besitzt,

- in horizontaler Brennlage betrieben wird,
- mit einem mittelfrequenten Wechselstromanteil ($F_V$) zwischen 10 kHz und 100 kHz gespeist wird, der im Entladungsmedium akustische Resonanzen erzeugt,

dadurch gekennzeichnet, daß die Frequenz und die Form des Wechselstromanteils derart gewählt sind, daß im Entladungsmedium stehende radiale akustische Wellen angeregt werden, wobei zwischen der Frequenz $F_V$ des Wechselstromanteils und der Grundfrequenz $F_R$ der stehenden akustischen Radialwellen folgende Beziehung annähernd erfüllt ist:

$$n \cdot 2F_V = m \cdot F_R$$

wobei m, n ganzzahlig sind.

2. Verfahren nach Anspruch 1, dadurch gekennzeichnet, daß zwischen der Frequenz $F_V$ des Wechselstromanteils und der Grundfrequenz $F_R$ annähernd die Beziehung $3 \cdot 2F_V = 2 F_R$ bzw. $F_V = 1/3\ F_R$ näherungsweise erfüllt ist.

3. Verfahren nach Anspruch 1, dadurch gekennzeichnet, daß zwischen der Frequenz $F_V$ des Wechselstromanteils und der Grundfrequenz $F_R$ annähernd die Beziehung $2 \cdot 2F_V = F_R$ bzw. $F_V = 1/4\ F_R$ näherungsweise erfüllt ist.

4. Verfahren nach Anspruch 1, dadurch gekennzeichnet, daß die Grundfrequenz $F_R$ der radial akustischen Resonanz gemäß der Formel $F_R = 3{,}83\ C/(2\pi R)$ ermittelt wird, worin R der Radius des rotationssymmetrischen Entladungsraumes und C eine entlang des Radius R gemittelte Schallgeschwindigkeit im Entladungsmedium bedeuten.

**Claims**

1. Method for operating a high-pressure discharge lamp (1), the high-pressure discharge lamp (1)

   - having a discharge vessel (2) with an approximately rotationally symmetrical discharge space and an ionizable filling, which is enclosed in a gastight fashion in the discharge vessel (2) and consists of a noble gas or a noble gas mixture, at least one metal halide additive and, possibly, mercury,
   - being operated in a horizontal operating position, and
   - being fed with a medium-frequency alternating-current component ($F_V$) of between 10 kHz and 100 kHz, which generates acoustic resonances in the discharge medium,

   characterized in that the frequency and the shape of the alternating-current component are selected in such a way that standing radial acoustic waves are excited in the discharge medium, the frequency $F_V$ of the alternating-current component and the fundamental frequency $F_R$ of the standing acoustic radial waves approximately fulfilling the following relationship:

$$n \cdot 2F_V = m \cdot F_R$$

   m, n being integers.

2. Method according to Claim 1, characterized in that approximately the relationship $3 \cdot 2F_V = 2F_R$ or $F_V = 1/3\ F_R$ between the frequency $F_V$ of the alternating-current component and the fundamental frequency $F_R$ is approximately fulfilled.

3. Method according to Claim 1, characterized in that approximately the relationship $2 \cdot 2F_V = F_R$ or $F_V = 1/4\ F_R$ between the frequency $F_V$ of the alternating-current component and the fundamental frequency $F_R$ is approximately fulfilled.

4. Method according to Claim 1, characterized in that the fundamental frequency $F_R$ of the radial acoustic resonance is determined in accordance with the formula $F_R = 3.83\ C/(2\pi R)$, in which R signifies the radius of the rotationally symmetrical discharge space, and C signifies the speed of sound in the discharge medium averaged along the radius R.

**Revendications**

1. Procédé pour faire fonctionner une lampe à décharge à haute pression, la lampe (1) à décharge à haute pression

   - ayant une enceinte (2) de décharge à chambre de décharge sensiblement de révolution et une atmosphère ionisable enfermée de manière étanche au gaz dans l'enceinte (2) de décharge, l'atmosphère étant constituée d'un gaz rare ou d'un mélange de gaz rare et d'au moins un additif à base d'halogénure métallique ainsi que, le cas échéant, de mercure,
   - fonctionnant en une position de service horizontale,
   - étant alimentée par une composante (Fv) de courant alternatif de fréquence moyenne, comprise entre 10 kHz et 100 kHz, qui produit des résonances acoustiques dans le milieu de décharge

   caractérisé en ce qu'il consiste
   à choisir la fréquence et la forme de la composante de courant alternatif de façon à exciter dans le milieu de décharge des ondes acoustiques radiales stationnaires, la relation suivante entre la fréquence ($F_V$) de la composante de courant alternatif et la fréquence de base ($F_R$) des ondes radiales acoustiques stationnaires étant sensiblement satisfaite :

$$n.2F_V = m.F_R$$

   m et n étant des nombres entiers.

2. Procédé suivant la revendication 1, caractérisé en ce que la relation $3.2F_V = 2F_R$ ou $F_V = 1/3\ F_R$ entre la fréquence $F_V$ de la composante de courant alternatif et la fréquence de base $F_R$ est sensiblement satisfaite.

3. Procédé suivant revendication 1, caractérisé en ce que la relation $2.2F_V = F_R$ ou $F_V = 1/4\ F_R$ entre la fréquence $F_V$ de la composante de courant alternatif et la fréquence de base $F_R$ est sensiblement satisfaite.

4. Procédé suivant la revendication 1, caractérisé en ce qu'il consiste à déterminer la fréquence de base $F_R$ de la résonance acoustique radiale suivant la formule $F_R = 3{,}83\ C/(2\pi R)$, R étant en rayon de la chambre de décharge de révolution et C est une vitesse du son moyennée le long du rayon R dans le milieu de décharge.

FIG. 1a

FIG. 1b

FIG. 2

FIG. 3

**FIG. 4**